# EUROPEAN PATENT APPLICATION

(11) **EP 2 410 351 A1**
(43) Date of publication of application: **25.01.2012**
(21) Application number: 11174993.3
(22) Date of filing: 22.07.2011
(51) Int. Cl.: G01S 19/21, G01S 19/34

(54) **Improvements to navigation receivers**

(30) Priority: 23.07.2010 GB 1012372; 12.07.2011 KR 20110069146
(71) Applicant: SAMSUNG ELECTRONICS CO., LTD., Suwon-si Gyeonggi-do 442-742 (KR)
(72) Inventor: Lee, Jung-Hwan, 442-742 Gyeonggi-do (KR)
(74) Representative: Birchenough, Lewis

(57) **Abstract**

An apparatus and method for determining position using signals received by a navigation receiver. The device for determining position within a navigation network, the device comprising: a receiver circuit for receiving positioning signals from a plurality of transmitters within the navigation network; a memory for storing the received positioning signals; and an auxiliary circuit for, when operating, generating interference which may affect reception of the positioning signals.

## Description

### BACKGROUND OF THE INVENTION

### 1. Field of the Invention

The present invention relates generally to a technique for determining position using signals received by a navigation receiver, and more particularly to methods, an apparatus and computer software for determining position.

### 2. Description of the Related Art

A navigation receiver receives signals transmitted by navigation transmitters (such as satellites, also known as space vehicles) within a navigation network. The received signals are then processed to provide an indication of position. A navigation receiver may be a dedicated apparatus or may be equipment that includes functionality other than navigation, such a mobile handset for a cellular wireless system.

The Global Positioning System (GPS) and the GLObal NAvigation Satellite System (Glonass or GLONASS) are examples of satellite navigation systems which may provide position information, and typically also provides velocity and timing information. Other satellite navigation systems are planned, including the European Galileo system, the Indian Regional Navigation Satellite System (IRNSS), and the Compass & Beidou satellite navigation systems. Generally, these systems are known as Global Navigation Satellite Systems (GNSS).

Other, non-satellite, navigation systems also are also known. Pseudolite navigation systems are ground-based alternatives to satellite navigation systems. Other terrestrial navigation systems, such as LOng RAnge Navigation (LORAN), are also known, along with systems in which cellular radio network access nodes are used as navigation transmitters and others in which Wi-Fi network access points are used as navigation transmitters.

To provide a reliable three dimensional position estimate using a navigation system, the receiver needs to solve a set of equations of four unknowns, i.e. a three dimensional position coordinate and time. Therefore, the receiver ideally needs to acquire and track at least four navigation transmitter signals.

Since satellites are not stationary, accurate information about their position and velocity at the time of transmission is required for satellite navigation systems. This information generally includes an indication of the time the signal was transmitted, precise information on the orbit of the satellite (also known as the ephemeris) and general information on all of the satellites (also known as the almanac).

The time, ephemeris and almanac information can be either decoded from satellite signals themselves (requiring, in the case of GPS, an uninterrupted signal lasting 30 seconds or longer), or obtained from a terrestrial server in the form of assisted data information (known in the case of GPS as Assisted-GPS (A-GPS)). The information may be provided to the receiver using a terrestrial wireless communication system such as a cellular wireless network.

Many Consumer Electronic (CE) devices such as mobile telephones, digital cameras, and the like are now being provided with navigation receivers. This enables applications such as mapping applications, Augmented Reality (AR) and geo-tagging of photographs to be performed.

Yield is the success rate of position calculation. Depending on the application, the sufficiency criteria (i.e. the required probability of a successful fix) will change. In most applications the yield should at least 80%.

Many applications demand a position fix in less than 30 seconds, with accuracy better than 50m, and with an appropriate yield. To provide such operation within a GPS system, a receiver unit typically requires A-GPS to provide a fix in less than 30 seconds, and at least four good quality signals from SVs. This principle also applies to any satellite system.

Navigation systems such as GPS are typically configured so that the system operates close to the noise floor, in order to limit transmission power at a satellite. Because of this, a received signal can be as weak as -160dBm (10⁻¹⁹W or 100zW). The 1-2GHz range of frequencies used by such satellite systems generally requires line of sight, and consequently the presence of buildings may considerably reduce the signal strength.

Equally, a relatively small amount of noise may render a signal from a satellite unusable. GPS receivers, contained within CE devices, may receive a significant amount of noise from other circuits within the CE device, such as a camera, LCD display, and harmonics from a mobile telephone antenna operating using Global System for Mobile Communications or Universal Mobile Telecommunications System (GSM or UMTS) standards, as well as WiFi and Bluetooth transceivers.

The low signal (in particular in urban areas), combined with increasing sources of interference may render a device unable to provide a position fix within the time constraints mentioned above, if at all, hence an unacceptably low yield is obtained.

One method to improve the probability of gaining a position fix is to switch off a source of interference (e.g. the camera) until a position fix is completed. However, since it may take many seconds, in a typical case 10 to 30 seconds, to achieve a fix, this solution is not generally practicable, since the CE device will be largely inoperative for that time.

### SUMMARY OF THE INVENTION

According to a first aspect of the invention there is provided a device for determining position within a navigation network, the device including a receiver circuit for receiving positioning signals from a plurality of transmitters within the navigation network; a memory for storing received positioning signals; and an auxiliary circuit for providing a functionality to the device, the auxiliary circuit, when in operation, generating interference which may affect the positioning signals received by the receiver, wherein the device is configured, in at least one mode of operation, to stop an operation of the auxiliary circuit for a stoppage period, to operate the receiver circuit and store a digital sample of positioning signals received at least during a part of the stoppage period in the memory, and to re-start the operation of the auxiliary circuit at the end of the stoppage period, wherein the device is configured to process the digital sample of received positioning signals so as to determine whether a position fix can be obtained, the determining providing an indication that the position of the receiver can be obtained, or an indication that the position of the receiver cannot be obtained, from the digital sample of the received positioning signals, and wherein the device is configured, in said at least one mode of operation, to enable restart of the operation of the auxiliary circuit prior to the determination as to whether a position fix can be obtained.

The device may further include a clock configured to provide a time signal to be stored in the memory, the time signal being used to provide an indication of the time at which a stored digital sample of positioning signals was received. The device may further be configured to compare a time signal of the navigation network to the time signal of the clock whereby to map the time signals of the clock to the time signal of the network.

According to a second aspect of the invention there is provided a method for determining a position of a device within a navigation network, the device including a receiver for receiving positioning signals from a plurality of transmitters within the navigation network, a memory for storing received positioning signals, and an auxiliary circuit for providing a functionality to the device, the auxiliary circuit, when in operation, generating interference affecting the positioning signals received by the receiver, the method including stopping the operation of the auxiliary circuit for a stoppage period; receiving and storing a digital sample of received positioning signals received at least during a part of the stoppage period; re-starting the operation of the auxiliary circuit at the end of the stoppage period; and processing the digital sample of received positioning signals to determine whether a position fix can be obtained, the determining providing an indication that the position of the receiver can be obtained, or an indication that the position of the receiver cannot be obtained, from the digital sample of the received positioning signals, wherein the operation of the auxiliary circuit at the end of the stoppage period is re-starting prior to the determination as to whether a position fix can be obtained.

According to a third aspect of the invention there is provided a computer readable storage medium storing computer readable instructions thereon for execution on a computing system to implement a method for determining a position of a device within a navigation network, the device including a receiver for receiving positioning signals from a plurality of transmitters within the navigation network, a memory for storing received positioning signals, and an auxiliary circuit for providing a functionality to the device, the auxiliary circuit, when in operation, generating interference affecting the positioning signals received by the receiver, the method including stopping the operation of the auxiliary circuit for a stoppage period; receiving and storing a digital sample of received positioning signals received at least during a part of the stoppage period; re-starting the operation of the auxiliary circuit at the end of the stoppage period; and processing the digital sample of received positioning signals so as to determine whether a position fix can be obtained, the determining providing an indication that the position of the receiver can be obtained, or an indication that the position of the receiver cannot be obtained, from the digital sample of the received positioning signals, wherein the operation of the auxiliary circuit at the end of the stoppage period is re-starting prior to the determination as to whether a position fix can be obtained.

Further features and advantages of the invention will become apparent from the following description of preferred embodiments of the invention, given by way of example only, which is made with reference to the accompanying drawings.

### BRIEF DESCRIPTION OF THE DRAWINGS

A system for improved detection of navigation signals will now be described as an embodiment of the present invention, by way of example only, with reference to the accompanying figures in which:
Figure 1 is a diagram of a mobile telephone in which embodiments of the invention may be used;
Figure 2 illustrates components of a receiver according to an embodiment of the invention;
Figure 3 illustrates a method according to one embodiment of the invention;
Figures 4 to 6 illustrate methods according to various embodiments of the invention;
Figure 7 is a timeline illustrating the mapping of a time signal from the receiver to GPS time in accordance with embodiments of the invention.

### DETAILED DESCRIPTION OF EMBODIMENTS OF THE PRESENT INVENTION

By way of example, embodiments of the invention will now be described in the context of a mobile telephone having a built-in GPS receiver. However it will be understood that this is by way of example, that the embodiments of the invention may use other navigation systems (such as GLONASS) and be realized in devices other than a mobile telephone.

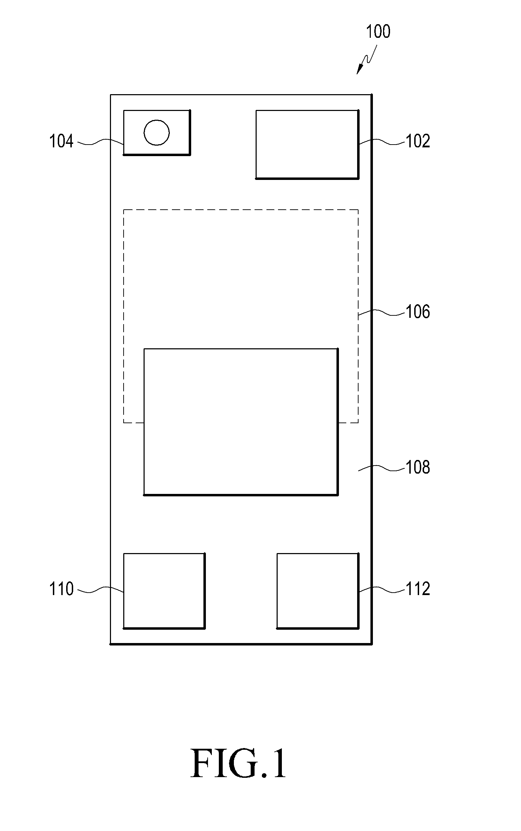

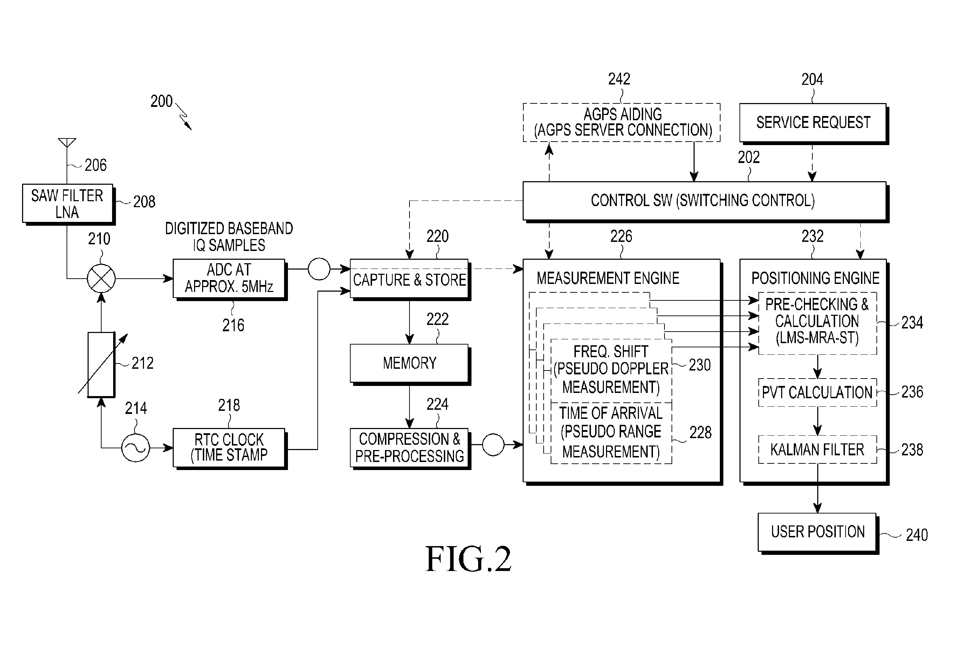

Figure 1 is a schematic diagram of a mobile telephone 100 in which embodiments of the invention may be used. The mobile telephone 100 comprises a GPS receiver 102 which comprises an antenna and receiving circuitry as described in more detail with reference to Figure 2. In addition to the GPS receiver 102, the mobile telephone comprises a number of auxiliary circuits which provide further functionality to the mobile telephone 100. These may include, but are not limited to, a camera 104, a screen 106 with associated driving circuitry, a battery 108 with control circuitry, a central processing unit (CPU) and memory 110 and one or more RF transceivers 112 such as GSM, UMTS (3G), WiFi and Bluetooth transceivers. A mobile telephone comprising such elements is known in the art, and therefore is not described.

The mobile telephone 100 may run a number of applications, i.e. software and/or hardware which provide functionality to the device. For example, a camera application may be provided by software running on the processor. The camera application may interact with the camera hardware 104 to take a photograph or video, which may then be displayed on the display 106.

As shown in Figure 1, the mobile telephone is configured with an augmented reality application. This application uses the camera to provide an image onto the screen which is augmented using information collected from one or more sources. For example, the GPS may be used to provide an indication of position, velocity or time. A compass, accelerometer, and/or gyroscope (not shown in Figure 1) may be used to provide an indication of the direction that the device is pointed and of the movement of the device. In addition, a data connection to a network may used to download information to superimpose on the camera image, to be shown on the screen.

As can be seen from Figure 1, the elements of the mobile telephone 100 are in close proximity to each other. Consequently, the operation of any one element can interfere with the operation of the GPS receiver 102, and in particular produce interference with the received GPS positioning signals.

Running an augmented reality application may require operation of one or more of the auxiliary circuits of the mobile telephone and consequently increases the interference with signals received by the GPS receiver. Also, any RF harmonics at the 2MHz bandwidth of GPS frequency (1.5GHz) can adversely affect GPS operation.

Figure 2 shows circuitry 200 of the mobile telephone of Figure 1 according to an embodiment of the invention. The circuitry 200 is based on a conventional GPS receiver, and as such any well known features are not described here, with embodiments of the invention being generally applicable when known receivers are unable to acquire a position fix.

As shown in FIG. 2, signals received from satellites via antenna 206 are passed to a front end filter, which in this embodiment is a Surface Acoustic Wave (SAW) filter and a Low Noise Amplifier (LNA) 208, followed by a mixer 210 to mix the received, filtered and amplified signals with signals from a local oscillator, which in this embodiment is a Temperature Compensated Crystal Oscillator (TCXO) 214 connected to the input of the mixer 210 via a variable frequency synthesizer 212. The variable frequency synthesizer 212 may provide a frequency tuned to a desired frequency of a navigation system, for example 1.57GHz in the case of GPS and 1.6GHz in the case of Glonass.

The output from the mixer 210 is an IF band signal at about 5MHz that are then sampled by a sampler, such as Analog to Digital Converter (ADC) 216.

The digital samples from ADC 216 are passed to a capture and store module 220, which may additionally receive a Real Time Clock (RTC) signal from RTC 218, which may use a timing signal from the TCXO 214. In addition, the capture and store module may receive additional data for facilitating the generation of a position fix, such as a Cell-ID provided by the controller 202 from an A-GPS aiding connection 242.

The digital signal samples, RTC signal and any other data are stored in memory 222 by the capture and store module 220. The signals are subsequently read from the memory by compression and pre-processing module 224 and passed to measurement engine 226.

Although not shown in FIG. 2, the ADC 216 may be directly connected to measurement engine 226 and may pass signals directly to the measurement engine 226 without involving the capture and store module 220, memory 222 and compression and pre-processing module 224. As an alternative, the capture and store module 220 may be configured so that, responsive to a signal from the controller 202, the signal samples from the ADC 216 are directed to a chosen one of the memory 222 and measurement engine 226.

By providing the signal samples from the ADC to the measurement engine 226 without storing the signal samples in memory, the GPS receiver 200 may operate in a "normal" fashion, i.e. by attempting to obtain a fix from signals which are continuously received in real time, as done by conventional GPS receivers.

The measurement engine 226 performs frequency shift measurements 230 for each applicable received satellite signal. The frequency shift measurements are a calculation of a pseudo Doppler shift. Time of arrival 228 is calculated for each applicable received satellite signal, and from this an estimated range between the satellite and the receiver, known as a pseudo range, is calculated. The calculated quantities are known as "pseudo" range and "pseudo" Doppler since they are derived using a clock that may have inaccuracies. The effect of the inaccuracies may be removed by subsequent calculation.

Pseudo range and pseudo Doppler measurements (230 in FIG. 2) for each satellite are then passed to the positioning engine 232 to determine a position of the receiver.

Pre-checking and calculation 234 is performed by the positioning engine 232. This pre-checking may include applying a Multipath Rejection Algorithm (MRA) to the received signals. The pre-checking is followed by a calculation of position, and optionally also a calculation of velocity and time (a PVT calculation) 234. The calculated position, velocity and time values are passed to a Kalman filter 238, which determines an estimate of the position, velocity and time based on a history of estimated data. A determined position is then output as a user position 240.

A controller 202 (represented, in this embodiment, by control software 202) is connected to the capture and store module 220, the measurement engine 226 and the positioning engine 232. In addition, the controller is connected to an Assisted GPS (A-GPS) server 242 and to a source of a service (i.e. position) request 204. The service request may be received from a processor, for example the processor 110 of the mobile telephone 100. The connection to the A-GPS server can be provided by, for example a connection through RF transceiver 112, such as via a mobile communications network.

The controller 202 may provide the A-GPS data to the measurement engine 226 to facilitate the measurement engine in determining the pseudo range and pseudo Doppler. Alternatively, the measurement engine 226 may receive the time, ephemeris and almanac data from the received GPS.

The controller 202 may provide overall control over the receiver, that is, the controller 202 may control the receiver to start receiving signals through the receiver chain. In addition, the controller 202 may signal to the capture and store module 220 to operate in a mode in which the positioning signal samples are stored in memory 222 or to operate in a mode in which the positioning signal samples are passed to the measurement engine 226.

In addition, the controller 202 may have a connection to one or more of the auxiliary circuits described above in relation to Figure 1. The controller 202 may signal to these circuits that they are to shut down their operation while signal samples are taken. This shutting down of the operation of the auxiliary circuits is described in more detail below.

While in Figure 2 many of the modules and functional entities have been shown separately, it will be recognized that this may not necessarily be the case. For example, some or all of the functionality may be performed by a processor running software. Equally some or all of the functionality may be performed by dedicated hardware. For example, the controller 202, capture and store module 220, compression and pre-processing module 224 and some or all of the functionality of the measurement engine 226 and positioning engine 232 may be performed in a general purpose processor, such as processor 110. The processor may call on dedicated hardware, for example to perform correlations to measure the time of arrival of the received signals.

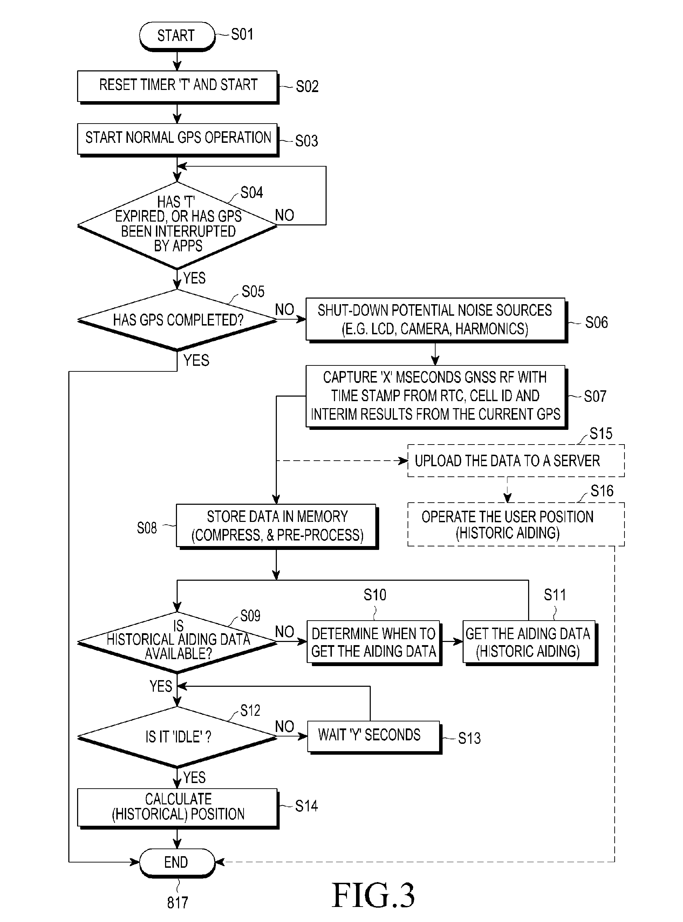

Figure 3 shows a flow diagram of one embodiment of the invention. The process starts at step S01, at which point a service request is received, and the receiver, if required, is started up.

In step S02 the controller 202 starts a Timer 'T'.

In step S03 the controller 202 starts a "normal" GPS operation mode. During this normal mode the signal samples from the ADC 216 are passed to the measurement engine 226. The measurement engine 226 and positioning engine 232 may then attempt to acquire a position fix in real time (or almost real time) from the received signals.

The controller 202 then loops, as represented by decision block S04, until either the Timer 'T' has expired or the GPS operation has been interrupted by applications running on, for example, the mobile telephone 100.

The duration for which timer 'T' runs may be preset or set according to the following examples. Timer 'T' may be set to run for at least 5 seconds, although shorter periods may be used. Exemplary values may be 8, 10, 15 or even 30 seconds. Alternatively the Timer 'T' may specify a much longer period, measured in minutes, for example 1 minute, 5 minutes or even 10 minutes. The duration of the timer 'T' may be preset, or adjusted based on, for example, the application making the position request. The duration of the Timer 'T' may be set to a period which is sufficiently long to provide a good probability of the device achieving a fix, while short enough so that the usability of the device is not overly compromised.

An interruption by an application may occur if, for example, the user has requests to exit or quit the application making the service request. As can be seen from the description below, subsequent steps, such as S06 and S07 take a short amount of time, and therefore may be completed before the application exits.

When either occurs, the controller 202 determines, in step S05, whether measurement engine 226 and positioning engine 232 have completed the process of obtaining a position fix, i.e. determines whether a position fix can be obtained. If a position fix can be obtained and has been obtained, then the position fix may be used (for example by being displayed on the screen) or stored in a memory (for example if a "geo-tagged" photograph has been taken). The method then ends at step S17.

However, if a position fix cannot be obtained from the received signals, the device changes operation mode and then, in step S06, the controller 202 signals to one or more of the auxiliary circuits within the mobile telephone 100 (that is, one or more of the camera 104, screen 106 with associated driving circuitry, battery 108 with control circuitry, CPU and memory 110, and RF transceivers 112), to temporarily stop operation, i.e. shut down.

The signal stopping the auxiliary circuits operation may indicate a period of time, that is a stoppage period, for which the auxiliary circuits are to stop operation. Alternatively in a subsequent step (not shown) the controller 202 may send a second signal, after a suitable stoppage period, indicating that the auxiliary circuits may start operating again.

During the stoppage period, shown by step S07, the controller 202 controls the GPS capture and store module 220 to capture and store a digital sample or "snapshot" of received GPS signals. The snapshot may last the duration of the stoppage periods. However, this is not necessarily since, for example, there may be buffer periods at the beginning and end of the stoppage period in which the received signals are not captured and stored.

The stoppage period for which these auxiliary circuits stop operation (shut down) are preferably in the range of 30ms to 5 seconds. Good results have been obtained using periods of 70ms, 100ms and 200ms. The period of time for which the auxiliary circuits are shut down may be preset. Alternatively, the period of time may be adjusted depending on, for example, the application making the service request, or upon a dynamically generated parameter, as described below. The duration of the stoppage period may be set to be relatively short, while being set to be long enough so that the signal sample received during the stoppage period is of sufficient length for a correlator to have a relatively high probability of correlating the received signal sample with a known signal.

In step S08 the captured "snapshot" of GPS signals is stored in memory 222 and may be compressed and processed by compression and pre-processing module 224. The processing by the compression and pre-processing module 224 may include tracking a single positioning signal (lead SV tracking) to acquire, for example, a clock signal from the received signal.

Steps S09 to S14 describe the processing of the digital sample to determine whether a position fix can be obtained, and if so, what the position fix is.

In step S09 the controller 202 checks if A-GPS data is available. The A-GPS data may have been previously downloaded to the device and stored in a memory. If the A-GPS data is not available, then in step S10 the controller 202 determines when to get the aiding (A-GPS) data and in step S11 acquires the aiding data through connection 242 (FIG. 2). Once the A-GPS data has been received, the method returns to step S09.

If the historical A-GPS data is available, then in step S12 a determination is made as to whether the system is in an IDLE mode, that is whether the system has spare processing resources to process the digital sample. If the system is not in the IDLE mode, that is if the system is busy, the system waits for a delay of Y seconds in step S13 before checking again in step S12 whether the system is in IDLE.

Steps S12 and S13 are optional, and may be replaced by the controller issuing an interrupt or the like to pause any running processes so that the position can be calculated.

When the system is in the IDLE mode, the method proceeds to step S14 in which the position snapshot of signal data is provided to the measurement engine 226 and the position is calculated. Once the position has been calculated, the method terminates in step S 17.

It will be understood that the received signals may be sufficiently weak that a position cannot be calculated. In such circumstance the measurement engine 226 and positioning engine 232 may, in step 514, provide an indication that a position fix cannot be obtained and the process will terminate in step S17. In general, the measurement engine and positioning engine 232 will determine whether a position fix can be obtained, and provide an indication as to whether a position fix can be obtained. In addition, if a position fix can be obtained, then the position fix can be provided.

As an alternative to storing the snapshot of data in memory in step S08, the snapshot may be uploaded to a computer or server in step 515. This may be done using one of the RF transceivers (for example, via a mobile telephone network). Alternatively, a wired connection (such as a USB link to a computer) may be used. A server, on receipt of the data may, in step S16, calculate a user position. This has the advantages that more processor intensive algorithms may be used to provide better sensitivity.

Although not shown, the data may be stored in a memory prior to being uploaded to a server. Equally, if it is determined in step S14 that a position cannot be calculated from the received signal in the device, the digital signal sample, including any interim calculation data, may be uploaded to the server where more powerful algorithms may be used.

In general, the stoppage period ends before the determination of a position fix from the digital sample, and equally before the determination of whether a position fix can be obtained from the digital sample. In other words, the digital sample taken, to enable a position fix (if possible) to be determined at a later time, in contrast to the normal operation of the GPS in which the signals are continuously received until a position fix is obtained, or the process is stopped.

While the method described above has been shown as continuous, there may be a significant delay between the storing of the digital sample (snapshot) and the calculation of position. For example, the calculation for a number of digital samples may be performed in a batch at the end of a particular time period, such as at the end of each hour or the end of a day. Alternatively, the calculation may be performed when the device is plugged into a source of power, such as the mobile telephone being plugged into a mains adaptor. This has the added advantage that the power consumed when calculating the position is deferred, increasing the battery life of the device.

Equally, the digital samples may be stored in memory before being uploaded to the server as a batch. This may occur if the capture is performed in a device without a wireless connection, such as a digital camera. When the photographs taken with the camera are uploaded to a computer (using, for example, a wired connection such as a USB connection), the computer may analyze the digital samples stored with the images and calculate the historic position from the stored digital samples.

The processing of the digital sample may occur after the end of the stoppage period. As discussed below, the processing may begin soon after the stoppage period ends. Alternatively, the processing may begin many hours, or days, after the end of the stoppage period.

Alternatively, the processing of the digital sample may start as soon as some of the digital sample is available (that is soon after the start of the stoppage period). However, it will be apparent that the stoppage period will end prior to the processing being complete.

The digital samples forming the snapshot may be passed to the measurement engine 226 while the digital samples are being received, i.e. while the auxiliary circuits are shut down. This may enable the measurement engine 226 and/or positioning engine 232 to perform a preliminary analysis of the data and, if necessary or desired, extend or shorten the period of time for which the auxiliary circuits are shut down, and the digital samples are captured and stored.

It will be understood that the full analysis of the digital sample of received positioning signals will be completed after the stoppage period has ended.

The process of stopping the operation of the auxiliary circuits and storing digital samples of the received signal may be described as shut down and capture.

It will be understood that the snapshot, being short in duration, is insufficient for a receiver to determine the time, ephemeris and almanac data from the signal. Consequently, A-GPS data may be used to determine position from the snapshot. The A-GPS data may be downloaded after the snapshot has been stored (historical A-GPS data). Alternatively, the receiver may store in memory future A-GPS data, which may be valid for a period of days. The A-GPS data may be requested and received by the mobile telephone via a mobile communications network. Alternatively, the A-GPS data may be received via a wired connection, such as USB connection, when the device is plugged into a computer.

In the embodiments where the digital sample is uploaded to a server, the server may itself request and receive the appropriate A-GPS data.

Equally, while it is theoretically possible to derive a position from a snapshot stored without a timestamp, the search space would be sufficiently large to make this difficult. Consequently a timestamp from the RTC 218 may be stored with the snapshot to provide an indication of the time at which the snapshot was taken. This timestamp will likely be generated in a machine useable form (such as a count from an arbitrary reference point), and consequently the timestamp may have to be mapped to the GPS time.

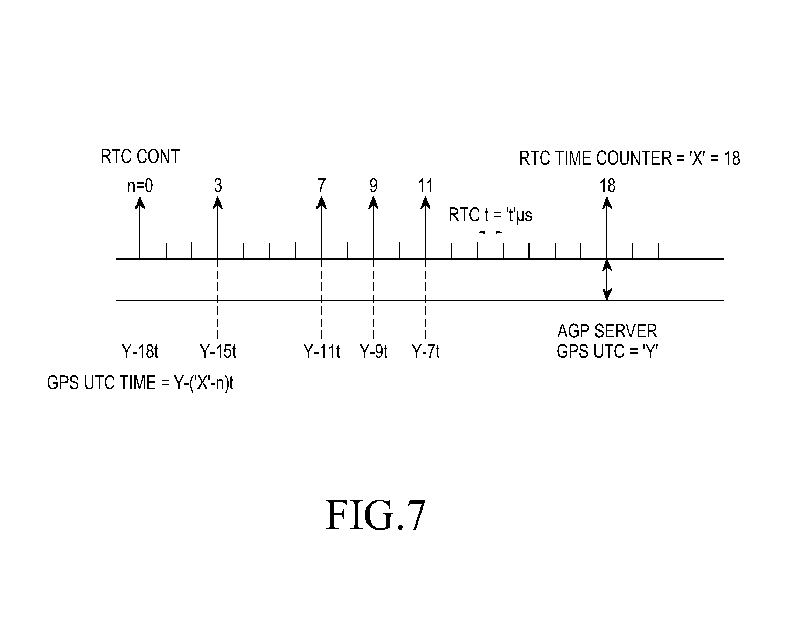

Figure 7 is a timeline of such a mapping process. The top line shows RTC time represented as a count of a counter *n*. For clarity, the left hand side *n* is shown as equalling 0, however this is not necessarily the case. Each division along the top line represents *t* µs, the period *t* being dependent on the RTC used. For example, an exemplary TCXO may operate at 32.2KHz, giving a period *t* of approximately 31µs.

An indication of the exact GPS time is received or determined by the receiver by methods that will be described in more detail later. The RTC time at which this occurs is denoted *n = X* and the GPS time at which this occurs is donated *Y*. In Figure 7, *X* has the value 18, however this is purely exemplary.

From knowledge of *X, Y*, and *t*, the RTC time *n* at any other point may be mapped to GPS time using the general formula GPS time = *Y - (X - n) t.*

For example, the GPS time at RTC time *n* = 3 is *Y -* (18 - 3) *t = Y -* 15*t.*

It will be apparent that the point in time at which *X* and *Y* are known may be either before or after any GPS snapshots are taken. For the mapping to be possible, there needs only to be one point at which both times are concurrently known.

The derivation of GPS time may be made a significant period before or after the snapshot is taken. This period may extend to days. It will be understood that, providing the RTC is continuously running (so as to provide an accurate timestamp at both the time the snapshot is taken and the time at which the GPS time is known) then the RTC time may be mapped to GPS time.

The GPS time may be derived or received in a number of ways. The first way is from the GPS signals themselves. For example, if the GPS is ever able to achieve a "normal" fix, then the GPS time will be known and can act as a time source for the mapping.

Alternatively, the receiver may be able to receive strong signals from one or more satellites. It is well known that at least four signals need to be received for an accurate fix to be made. However, only one signal is required to derive GPS time. Consequently, the receiver may look for a single strong signal from its operation in the normal GPS mode to derive a time signal, and then use the snapshot from the shut down and capture process to derive position.

Alternatively the GPS time may be received from the A-GPS server. Equally, any other network time server may be used.

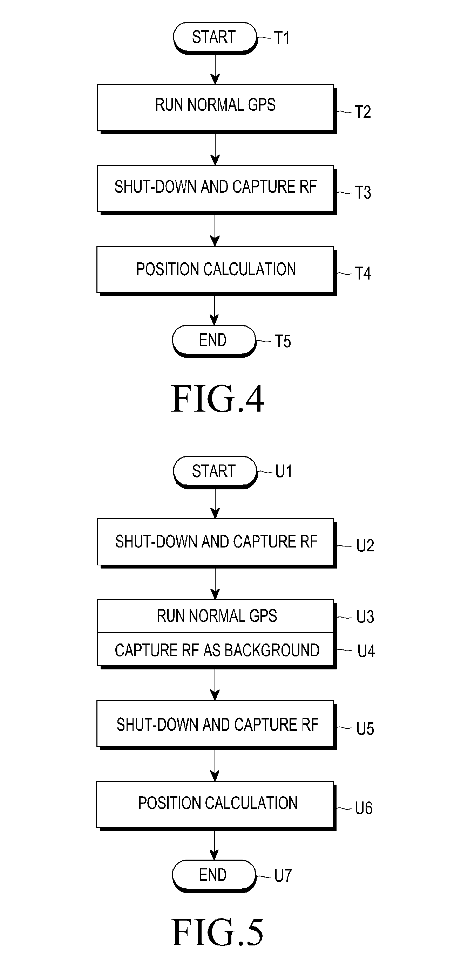

Alternative embodiments of the method of Figure 3 will now be described with reference to Figures 4 to 6. It will be understood that elements such as the timer T and the checking of A-GPS data may be used within these methods. However, for clarity and conciseness, such description is not repeated.

In Figure 4, the method starts at step T1 at which the service request is received, and proceeds to step T2 in which a normal GPS mode is run, this may correspond to steps S03 and S04 in Figure 3. It is assumed in this exemplary method that the normal GPS mode fails to provide an accurate position fix. Consequently, in step T3 a shut down and capture operation is performed, corresponding to steps S06 to S08. This captured data is then used for a position calculation in step T4 before the method terminates at step T5.

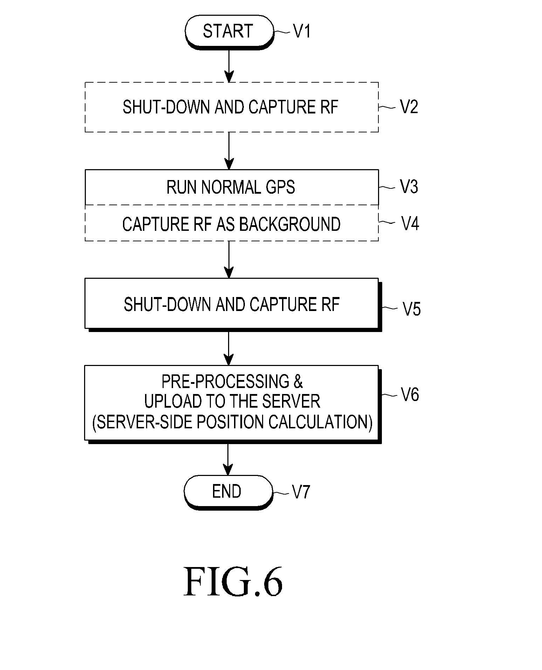

The above described method may be considered a base mode, or mode A. It will be understood that the mode A may not be able to provide a position fix if the conditions are particularly adverse. If this is the case, the system may operate using the method of Figures 5 or 6, which can be labelled modes B and C, respectively.

Figure 5 shows mode B. In this method, the process starts at step U1 and proceeds to a preliminary shut down and capture step U2. The result of this capture process is stored, and in steps U3 a normal GPS mode is run. During the running of this normal GPS mode, the received RF may be captured and stored in memory (step U4) so as to facilitate subsequent processing.

Having run the normal GPS (until, e.g. the expiry of timer T), and again having failed to obtain a fix using the normal GPS mode, the method proceeds to step U5, in which a second shut down and capture step is performed.

Finally in step U6, the captured RF is used to determine a position, and the method terminates in step U7. The controller may defer the processing of the digital sample from the first shutdown and capture step U2 until after the second shut down and capture step U5.

By performing the preliminary shut down and capture (step U2) in addition to the second shut down and capture (step U5), the system can increase the probability of receiving a signal of sufficient strength to be able to determine position. Equally, the preliminary shut down and capture step and/or the stored signal from the normal GPS operation, may be used to derive an accurate GPS time signal, which may be used as described above to map RTC time to GPS time.

Mode C will now be described with reference to Figure 6. Mode C may be based on either of mode A or mode B, differing only in the final step V6. The method starts at step V1 and proceeds to optional preliminary shut down and capture step V2 (corresponding to step U2), as described above.

From step V2, the method proceeds to step V3 (corresponding to steps T2 and U3) in which the normal GPS is run. During step V3, an optional step of capturing RF as background, step V4 (corresponding to step U4) may be performed.

After V4, a latter shut down and capture steps V5 is performed. Having captured the RF the data is pre-processed (for example by being compressed) and uploaded to a server in step V6. This may correspond to step S 15 in Figure 3. The server performs position calculating and may provide the calculated position to the device. The method ends in step V7.

The advantages of using a server are that embodiments of the invention may be realized with devices having insufficient processing power to derive a position from the snapshot. In addition, the use of a server may enable significantly more powerful, and processor intensive, algorithms to be used. Trials have shown that such algorithms may provide the equivalent of a 5dB gain to the received signal, further improving the operation of GPS receivers in adverse conditions.

The control may use the three modes in a cascading fashion. That is, a fix may be attempted using the mode A. If this mode is not successful, the controller 202 may use modes B or C. As mentioned above, a server can provide better signal processing which would not otherwise be available to the mobile telephone. Equally, mobile telephone signals, being generated by surface stations, are generally more powerful than GPS signals, and consequently a mobile phone signal may be sent and received in conditions where the GPS signal is weak.

In Figures 3 to 6, the use of "normal" GPS has been described in for each position determination (that is for each service request). However this may not be the case. For example, having determined that a position fix cannot be obtained using the normal GPS operation, the device may make repeated position determinations using the shut down and capture process. This may allow repeated updates of position to be made, without each time having to attempt to obtain a normal position fix.

The operation of the measurement engine 226 and positioning engine 232 during the "normal" GPS operation mode is further described below.

The measurement engine 226 receives digitized RF samples from the ADC 216 or from the compression and pre-processing module 224, and acquires visible satellites, and then starts tracking the active channels simultaneously. This unit performs digital processing of GPS signals and estimates navigation parameters required to solve the navigation task. The procedures of this unit in this embodiment include:
● Acquisition & Re-acquisition: search for the signal both in frequency and C/A code phase then identify the existence of the signal and confirm detection.
● Signal Tracking: after a successful acquisition of a GPS satellite signal, approximate estimations of both code alignment and Doppler shift are obtained. In order to attain accurate measurements and ensure continuous adjustments of these two entities a tracking process of both code phase, using first order delay locked loop (DLL), and Doppler frequency, using combination of frequency locked loop (FLL) and phase locked loop (PLL) has to be carried out immediately after detection.
● Bit Synchronization: uses 20 coherent correlators with 20 ms accumulation time. Deferent time positions of bit boundary are used in CA code generation process. Estimation of bit boundary corresponds to the correlator with a maximum output value.
● Frame Synchronization: preamble is searched to determine the start of each sub-frame. To avoid false preambles parity bits of the navigation words are checked. The frame synchronization is achieved when the best hypothesis, which has the maximum number of successfully parity checks, has at least 10 successfully checked.

The outputs of CE are the raw data of frames, pseudo-range and pseudo-Doppler measurement for each active channel, and channel status such as SNR.

The Positioning Engine (PE) 232 uses pseudo-range and pseudo-Doppler measurements, as well as satellite ephemeris to calculate receiver position, velocity, and time (PVT). Also, the PE determines satellite positions relative to the receiver (azimuth and elevation angles), and Dilution of Precision (DOP). The latter gives an estimate of the positional accuracy based on the angular separation between the satellites used to calculate the receiver's position.

The positioning engine in this embodiment includes the following functions:
● NAV Message Decoder: decodes the data from the 50 bps L1 NAV message. The message consists of a 1500 bit long frame made up of five sub-frames, each sub-frame being 300 bits long. The decoder includes parity based error checking, so that only valid data is returned to the positioning engine.
● Satellite Position & Velocity Calculation: calculates the position of each satellite in ECEF(Earth-Centered Earth-Fixed) (x, y, z) coordinates based on the ephemeris and clock correction parameters given in sub-frames 1, 2, and 3, and the time of signal transmission as determined from the pseudo-range measurements.
● Corrected Pseudo-range Calculation: clock correction parameters are broadcast in sub-frame 1. In order to reduce the positioning errors, the measured pseudo-ranges must be corrected to account for small time differences between the clocks onboard each satellite, and relativistic effects.
● Calculate Receiver Position 3D: the receiver knows the exact satellite ECEF positions at a given time of transmission. It knows the pseudo-range, or the difference in time of reception, for each satellite. In order to calculate the receiver ECEF position, it is necessary to calculate the exact range, or transmission delay, between each satellite and the receiver. There are four unknowns, therefore a minimum of four satellites are required for the calculation. When there are more than four satellites, the problem may be generalized as an over-determined linear algebraic equation, which has no exact solution. The least squared solution is calculated iteratively using a pseudo-inverse.
● Calculate Receiver Position 2D: To calculate a 2D position, we require a previous good 3D position fix. By assuming that the altitude is fixed to the last known value, it is possible to calculate a 2D position using only three satellites.
● Dilution of Precision Calculation: DOP is used to describe the effect of the geometric strength of the satellite constellation on the accuracy of the position calculation. Good (low) DOP occurs when there is wide angular separation between the satellites used in the position solution. The DOP is derived from the diagonal elements of the covariance matrix of the least squares solution. Horizontal Dilution Of Precision (HDOP) is part of the NMEA GPGSA sentence.
● Kalman Filter: adjusts the final PVT output between prediction and measurement, with a decision based on both adopted dynamic model and calculated standard deviation of measurements.

The operation of the measurement engine 226 and the positioning engine 232 when processing a stored sample (snapshot) of GPS data is different to that when in the normal mode. In particular, the snapshot is not sufficiently long to receive the time, ephemeris and almanac data from the signal. Consequently A-GPS data is used to provide the time, ephemeris and almanac data.

The RTC timestamp is mapped using the process described above with relation to Figure 7, to GPS time. It will be understood that this may be done at the time the signal is processed, or, when before signal data is stored (the latter requiring a correlation of the GPS and RTC times to be previously performed).

The knowledge of RTC time is used to derive the signals transmitted by the satellites. These known signals are then used in the correlators to determine the timing of the signals. Once the timings are known, the pseudo range and pseudo Doppler may be derived in the normal fashion.

In addition, additional location information, such as a Cell-ID, or a position derived from triangulation from multiple cell towers, from the A-GPS connection may be used to narrow the search space. It will be understood that if an approximate position is known for the snapshot, then the system will be able to deduce which signals (i.e. from which satellite) will be expected to be present in the received signal samples. This reduces the number of satellite signals which need to be searched for in the correlator. Equally, the approximate position provides a good initial estimate for the pseudo ranges, and therefore benefits the calculation of position from these ranges.

The bit synchronization described above uses a 20 ms accumulation time, though this is not necessarily the case. To increase the sensitivity of system acquisition, a longer accumulation time may be used. For example a 200msec accumulation time can be used. This longer accumulation can increase the error in Doppler frequency shift as the satellites and the user device can move and accelerate significantly within that time. To overcome this, an extra Doppler shift calculation & compensation algorithm may be included in the signal processing chain. The use of a longer accumulation time may increase the senility of the system further.

The capture and process method has been described above in relation to obtaining a single position indication. However, it is also applicable to tracking systems. In tracking systems a sample of the GPS signal may be taken at regular intervals, for example every 1 second or 10 seconds.

In such a system the use of the normal GPS is not required, and consequently the controller may simply control the receiver to capture and store snapshots of the GPS signal at regular intervals. This provides a significant power saving, since the GPS is not continuously operating.

For example, a 100ms snapshot requires approximately 100KB of storage. 1 hour of capture at intervals of 1 second is equivalent to 100KBx60x60=360MB and 24hr is 8.6GB. The storage can be further optimized by adjusting the capture interval based on speed, that is, when the user doesn't move fast, the GPS capture interval is relaxed from 1Hz to a few time in a minute - 0.1/0.01Hz, yielding the reduction of data size from 8.6GB to 0.8GB or 100MB.

At the end of the capture period, for example at the end of the day, the plurality of snapshots captured may be analyzed as a batch, and the stored snapshots cleared from memory. This provides further power savings, since the signal processing system (such as the measurement engine 226 and positioning engine 232) are not continuously being started up and shut down. Equally, the analysis may only be performed when the CE device is plugged into a power source, ensuring that the drain on the battery is minimized. As an alternative, the data may be uploaded to a server or personal computer which performs the calculations.

It will be understood that the capture and store procedure may be used in conjunction with the operation of the normal GPS for such tracking.

While the above embodiments have been described in the context of a mobile telephone, it will be understood that the invention is applicable to other CE devices, such as a digital camera, PDA, personal computer, satellite navigation device, vehicle tracking device and the like.

Certain CE devices are not provided with a SIM card, providing a conventional mobile telephone connection to a network. Nevertheless, the Cell-ID can be derived without a SIM card from the open GSM Broad casting Channel (BCCH) using an appropriate receiver, as described below.

Once the Cell-ID is obtained it can be stored with the snapshot of GPS data. When the device or CE is connected to the server (for example when the device is connected to a computer which has a network connection to the A-GPS server, the Cell-ID can be mapped to a geographic position).

The method in this embodiment includes:
●reading the Frame Burst (to set the frame boundary) and Synch Burst (to adjust frequency shift);
● counting the frames until the BCCH channel is reached; and
● receiving and decoding the 184 bits that contains Cell-ID (if necessary, decoding PCH as well to extra other information such as Cell Broadcast, obtaining STD (regional telephone code)) the Cell-ID containing country code, operator code and Base Station Code can be decoded and stored with GPS RF capture & RTC time Stamp. To implement this feature, the device may have an accurate timer to count exact GSM bit rate (4.6ms.)

The above embodiments are to be understood as illustrative examples of the invention.

It should be noted that, whilst the above specific embodiments have been described in relation to a GPS satellite navigation systems, other, non-satellite navigation systems, such as pseudolite navigation systems, LORAN navigation systems, cellular radio network navigation systems and Wi-Fi network navigation systems, may be incorporated as one or more of the systems used by the receiver in accordance with the invention.

It should further be noted that while specific embodiments were described in relation to a mobile telephone, it is possible that embodiments of the invention may be used in almost any device requiring a position fix.

It is to be understood that any feature described in relation to any one embodiment may be used alone, or in combination with other features described, and may also be used in combination with one or more features of any other of the embodiments, or any combination of any other of the embodiments. Furthermore, equivalents and modifications not described above may also be employed without departing from the scope of the invention, which is defined in the accompanying claims.

## Claims

1. A device for determining position within a navigation network, the device comprising:
a receiver circuit for receiving positioning signals from a plurality of transmitters within the navigation network;
a memory for storing the received positioning signals; and
an auxiliary circuit for, when operating, generating interference which may affect reception of the positioning signals,
wherein when the device operates in a first mode, operation of the auxiliary circuit stops for a stoppage period, the receiver circuit operates and a digital sample of positioning signals received during a part of the stoppage period is stored in the memory, and the operation of the auxiliary circuit re-starts at an end of the stoppage period,
wherein the device processes the digital sample of the received positioning signals to determine whether a position fix can be obtained, with the determining providing an indication that the position of the receiver can or cannot be obtained from the digital sample of the received positioning signals, and
wherein operation of the auxiliary circuit re-starts prior to the determination of whether the position fix can be obtained.

2. The device of claim 1, further comprising a clock configured to provide a time signal to be stored in the memory, the time signal being used to provide an indication of the time at which a stored digital sample of positioning signals was received.

3. The device of claim 2, wherein the device compares a time signal of the navigation network to the time signal of the clock to map the time signal of the clock to the time signal of the network.

4. The device of any preceding claim, wherein when the device operates in a second mode of operation the receiver circuit receives positioning signals while the auxiliary circuit is in operation and processes the received positioning signals to determine whether the position fix can be obtained from the positioning signals received while the auxiliary circuit is in operation, the determining providing an indication that the position of the receiver circuit can or cannot be obtained from the positioning signals received while the auxiliary circuit is in operation.

5. The device of claim 4, wherein the device operates in the second mode of operation, and if the position of the receiver cannot be obtained from the positioning signals received while the auxiliary circuit is in operation, to subsequently operate in the first mode of operation.

6. The device of claim 5, wherein the device operates in the first mode of operation prior to reverting to operating in the second mode of operation.

7. The device of any of claims 4 to 6, wherein the device processes the positioning signals received while the auxiliary circuit is in operation to provide an indication of a time signal of the navigation network.

8. The device of any preceding claim, wherein the device receives an indication of the time signal of the navigation network from a communications network.

9. The device of any preceding claim, wherein the device internally processes the digital sample of received positioning signals to determine whether the position fix can be obtained.

10. The device of claim 9, wherein the device uses assistance data defining parameters of the navigation network in the determination of whether a position fix can be obtained.

11. The device of claim 10, wherein the device receives the assistance data from a remote device.

12. The device of claim 11 wherein the device stores the assistance data.

13. The device of any of claims 1 to 8, wherein the processing of the digital sample of the received positioning signals to determine whether the position fix can be obtained comprises sending the signals to a remote device, the remote device being configured to provide the determination as to whether a position fix can be obtained.

14. The device of any preceding claim, further comprising a further receiver circuit configured to receive signals from a mobile communications network and to determine a preliminary indication of position from the received signals from the mobile communications network, wherein the preliminary indication of position is associated with a digital sample of received positioning signals and is stored in the memory.

15. A method for determining a position of a device within a navigation network, the device comprising a receiver for receiving positioning signals from a plurality of transmitters within the navigation network, a memory for storing the received positioning signals, and an auxiliary circuit for when in operation, generating interference which may affect reception of the positioning, the method comprising:
stopping the operation of the auxiliary circuit for a stoppage period;
receiving and storing a digital sample of positioning signals received during a part of the stoppage period;
re-starting the operation of the auxiliary circuit at an end of the stoppage period; and
processing the digital sample of the received positioning signals to determine whether a position fix can be obtained, the determining providing an indication that the position of the receiver can or cannot be obtained from the digital sample of the received positioning signals, and
wherein the operation of the auxiliary circuit is re-started at the end of the stoppage period prior to the determination as to whether a position fix can be obtained.
